# EUROPÄISCHE PATENTSCHRIFT

(11) **EP 2 581 684 B1**
(45) Veröffentlichungstag und Bekanntmachung des Hinweises auf die Patenterteilung: **25.10.2017**
(21) Anmeldenummer: 12191787.6
(22) Anmeldetag: 29.09.2010
(51) Int. Cl.: F24J 2/05, F24J 2/14, F24J 2/18, F24J 2/46

(54) **Absorberrohr**
Absorber pipe
Tuyau d'absorbeur

(30) Priorität: 29.09.2009 DE 102009045100
(43) Veröffentlichungstag der Anmeldung: 17.04.2013
(62) Teilanmeldung aus: 10759899.7
(73) Patentinhaber: Rioglass Solar Holding, S.A., 33695 Pola de Lena, Asturias (ES)
(72) Erfinder: Kuckelkorn, Thomas, 07743 Jena (DE); Möllenhoff, Marc, 95444 Bayreuth (DE); Albers, Christina, 92637 Weiden (DE); Eichel, Paul, 95666 Mitterteich (DE)
(74) Vertreter: Mehler Achler

(56) Entgegenhaltungen:
- CN-A- 101 270 923
- CN-Y- 201 203 279
- DE-A1- 19 840 181
- DE-B4- 10 231 467
- US-A- 4 273 104
- US-A1- 2004 134 484

## Beschreibung

Die vorliegende Erfindung betrifft ein Absorberrohr, insbesondere für Sonnenkollektoren in solarthermischen Kraftwerken, gemäß dem Oberbegriff des Anspruchs 1. Sonnenkollektoren können beispielsweise mit einem Parabolspiegel, auch Kollektorspiegel genannt, ausgestattet werden und in so genannten Parabolrinnen-Kraftwerken eingesetzt werden. In bekannten Parabolrinnen-Kraftwerken wird als Wärmeträgermedium beispielsweise ein Thermoöl eingesetzt, das mithilfe der von den Parabolspiegeln reflektierten und auf das Absorberrohr fokussierten Sonnenstrahlen bis ca. 400° C erhitzt werden kann. Das Absorberrohr besteht dabei in der Regel aus einem Metallrohr, welches eine strahlungsabsorbierende Schicht aufweist und einem typischerweise aus Glas bestehendem Hüllrohr, welches das Metallrohr umgibt. Das erhitzte Wärmeträgermedium wird durch das Metallrohr durchgeleitet und beispielsweise einer Vorrichtung zum Erzeugen von Wasserdampf zugeführt, mit dem in einem thermischen Prozess die Wärmeenergie in elektrische Energie umgewandelt wird. Das Metallrohr und das Hüllrohr verlaufen parallel und konzentrisch zueinander. Zwischen dem Metallrohr und dem Hüllrohr wird ein Ringraum gebildet, der axial durch eine Wandung abgedichtet wird, die üblicherweise aus Metall besteht. Die einzelnen Absorberrohre sind in etwa 4 m oder länger und werden zu Solarfeldschleifen mit einer Gesamtlänge bis zu 800 m zusammengeschweißt. Derartige Absorberrohre sind beispielsweise aus der DE 102 31 467 B4 bekannt.
Die üblicherweise verwendeten Wärmeträgermedien und insbesondere Thermoöle setzen mit zunehmender Alterung Wasserstoff frei, der beispielsweise im Thermoöl gelöst ist. Die Menge des gelösten Wasserstoffes hängt vom verwendeten Thermoöl und von den Betriebsbedingungen des Ölkreislaufes ab.
Bei steigender Temperatur nehmen die Zersetzungsrate und damit die Entstehungsrate von Wasserstoff zu. Die Zersetzung des Thermoöls kann zusätzlich durch Verunreinigungen, beispielsweise durch Wasser, das durch Leckagen der Wärmetauscher in den Ölkreislauf gelangt, beschleunigt werden. Der freigewordene Wasserstoff gelangt infolge von Permeation durch das Metallrohr in den evakuierten Ringraum, wobei die Permeationsrate durch das Metallrohr mit steigender Betriebstemperatur des Metallrohres ebenfalls zunimmt. Als Folge davon steigt auch der Druck im Ringraum, was eine Erhöhung der Wärmeleitung durch den Ringraum zur Folge hat, die wiederum zu Wärmeverlusten und zu einem geringeren Wirkungsgrad des Absorberrohres bzw. des Sonnenkollektors führt. Im Endeffekt verringert sich die Lebensdauer des Absorberrohres, da ab einer bestimmten Zeit kein ausreichender Wärmeertrag mehr generiert werden kann, um den thermischen Prozess effektiv durchführen zu können.

Um den Druckanstieg im Ringraum zumindest zu reduzieren und damit die Lebensdauer des Absorberrohres zu verlängern, kann der in den Ringraum gelangte freie Wasserstoff durch Gettermaterialien gebunden werden. Die Aufnahmekapazität der Gettermaterialien ist aber begrenzt. Nach Erreichen der maximalen Beladungskapazität bzw. nach Sättigung des Gettermaterials steigt der Druck im gesamten Ringspalt abhängig vom Wasserstoffpartialdruck der Gasphase so lange an, bis er im Gleichgewicht mit dem Partialdruck des freien, aus dem Thermoöl herausgelösten Wasserstoff ist. Durch Feldmessungen konnten bisher Gleichgewichtsdrücke von einigen mbar nachgewiesen werden. Durch den freien Wasserstoff entsteht eine erhöhte Wärmeleitung im Ringspalt mit den oben genannten nachteiligen Folgen für den Wirkungsgrad des Sonnenkollektors.

Absorberrohre, welche im Ringraum mit Gettermaterialien versehen sind, sind beispielsweise aus der WO 2004/063640 A1 bekannt. Hierin ist eine Haltevorrichtung für Gettermaterial beschrieben, in welcher das Gettermaterial in einer rinnenförmigen Schiene gelagert wird. Die Schiene ist über Füße am Metallrohr befestigt. Die Füße sind am Metallrohr angeschweißt, so dass es hier leicht zu einer Leckage kommen kann, wodurch das Wärmeträgermedium in den Ringraum gelangen und das Vakuum im Ringraum verloren gehen kann. Nachteilig an dieser Haltevorrichtung ist weiterhin, dass die im Betrieb auftretenden starken Temperaturunterschiede zwischen dem Metallrohr und der Tragevorrichtung und damit unterschiedliche Längenausdehnungen berücksichtigt werden müssen, um ein Verbiegen oder Abreißen der Schiene zu verhindern, was einen erhöhten konstruktiven Aufwand erfordert.

Ferner befindet sich die Schiene in einem Bereich, welcher der direkten Sonneneinstrahlung ausgesetzt sein kann. Insbesondere Strahlen, welche vom Spiegel kommen und das Metallrohr verfehlen oder nur streifen (defokussierte Strahlung), können zu einer Erwärmung der Schiene und damit des Gettermaterials führen. Dies ist insofern nachteilig, als die Aufnahmekapazität des Gettermaterials für freien Wasserstoff mit steigender Temperatur des Gettermaterials abnimmt, so dass bereits am Gettermaterial gebundener Wasserstoff wieder freigesetzt wird, wodurch der Druck im Ringraum und damit die Wärmeleitung durch den Ringraum wieder ansteigen. Da die Schiene über die Füße direkt mit dem Metallrohr verbunden ist, findet hierüber eine Wärmeübertragung, insbesondere ein konduktiver Wärmetransport hin zum Gettermaterial statt, was seine Erwärmung unterstützt.

Wie bereits eingangs erwähnt, weisen gattungsgemäße Absorberrohre üblicherweise Wandungen auf, mit denen der Ringraum abgedichtet wird. Dazu erstrecken sie sich zwischen dem Metallrohr und dem Hüllrohr. Da das Metallrohr und das Hüllrohr aus unterschiedlichen Materialien bestehen und im Betrieb des Absorberrohres unterschiedlich stark aufgeheizt werden, dehnen sie sich insbesondere in axialer Richtung unterschiedlich stark aus. Die Wandung umfasst eine Dehnungsausgleichseinheit, mit welcher die unterschiedlichen thermischen Ausdehnungen ausgeglichen werden können. Die Dehnungsausgleichseinheiten sind zumindest teilweise aus Metall gefertigt, so dass sie für Sonnenstrahlung undurchlässig sind. Folglich wird das Wärmeträgermedium in dem Bereich, der von den Dehnungsausgleichseinheiten umschlossen ist, nicht erwärmt, so dass sich der Wirkungsgrad des Absorberrohres verschlechtert, je größer der von den Dehnungsausgleichseinheiten umschlossene Bereich ist.

Andererseits kann das Gettermaterial vorteilhaft in den Dehnungsausgleichseinheiten angeordnet werden. Da sie, wie oben beschrieben, für die Sonnenstrahlung undurchlässig sind, können die Sonnenstrahlen das Gettermaterial nicht oder zumindest nur in reduziertem Umfang erreichen und entsprechend nicht oder weniger stark erwärmen. Folglich wird die Aufnahmekapazität des Gettermaterials für freien Wasserstoff nicht oder zumindest weniger stark im Vergleich zu direkter Bestrahlung, durch die Sonnenstrahlung verringert. Entsprechende Anordnungen des Gettermaterials sind beispielsweise aus der DE 10 2005 022 183 B3 und der CN 201 203 279 Y bekannt.

Um jedoch den Wirkungsgrad des Absorberrohres zu vergrößern, ist man bestrebt, die Dehnungsausgleichseinheiten so klein wie möglich auszuführen, um den von ihnen umschlossenen Bereich des Absorberrohres zu minimieren. In diesem Zusammenhang spricht man von einer Vergrößerung der Aperturfläche des Absorberrohres, wobei die Aperturfläche den Bereich des Absorberrohres bezeichnet, der ungehindert der Sonnenstrahlung zugänglich ist. Zusammen mit der Minimierung des Bereiches, der von den Dehnungsausgleichseinheiten umschlossen wird, wird auch der Raum minimiert, der zum Anordnen des Gettermaterials in den Dehnungsausgleichseinheiten zur Verfügung steht. So kann es zu einer Situation kommen, in der nicht mehr genügend Gettermaterial in den Dehnungsausgleichseinheiten angeordnet werden kann, so dass die während des Betriebs des Absorberrohres freigesetzte Menge Wasserstoff nicht mehr im benötigten Umfang adsorbiert werden kann. Die Aufnahmekapazität für freien Wasserstoff ist proportional zur Menge des eingesetzten Gettermaterials. Folglich ist bei Absorberrohren mit maximierter Aperturfläche die Aufnahmekapazität des Gettermaterials früher erschöpft und der Wirkungsgrad des Absorberrohres fällt früher, so dass es früher gegen ein neues Absorberrohr ausgetauscht werden muss, was seine wirtschaftliche Bilanz negativ beeinflusst.

Derzeit am Markt erhältliche Absorberrohre sind mit einer Dehnungsausgleichseinheit versehen, die sich entweder in den Ringraum zwischen dem Absorberrohr und dem Hüllrohr erstreckt (DE 102 31 467 B4) oder die das Absorberohr und das Hüllrohr außen miteinander verbindet (DE 60 223711 T2). Bei einer Temperaturerhöhung des Absorberrohres staucht sich somit die sich im Ringraum ersteckende Dehnungsausgleicheinheit, wodurch sich die Apertur des Absorberrohres unter den Temperaturbedingungen im Betrieb erhöht.

Die Wandung, mit welcher der Ringraum abgedichtet wird, besteht zumindest abschnittsweise aus Metall, so dass eine Glas-Metall-Verbindung am Ende des Hüllrohres vorgesehen werden muss. Da in der Glas-Metall-Verbindung, Metall und Glas direkt ineinander übergehen, sind die unterschiedlichen Längenausdehnungen infolge einer Temperaturänderung hier besonders kritisch. Infolge der unterschiedlichen Längenausdehnung treten an der Glas-Metall-Verbindung häufig Schäden auf, die zu einem Verlust des Vakuums im Ringraum führen. Dies hat eine deutliche Verringerung des Wirkungsgrades des Sonnenkollektors zufolge, der dann nicht mehr wirtschaftlich betrieben werden kann.

Die sich zum Ringraum erstreckende Dehnungsausgleichseinheit schirmt die dem Kollektor abgewandte Hälfte der Glas-Metall-Verbindung vor defokussierter, konzentrierter Strahlung ab. Die mit höheren Temperaturen einhergehende Stauchung der Dehnungsausgleichseinheit kann dazu führen, dass die Glas-Metall-Verbindung defokussierter Strahlung ausgesetzt ist, insbesondere bei einer axial verkürzten Ausgestaltung der Dehnungsausgleichseinheit.

Im Falle der außen liegenden Dehnungsausgleicheinheit bietet diese keinen Schutz für die Glas-Metall-Verbindung. Daher wird an anderer Stelle (DE 60 223 711 T2) ein Schild zum Schutz des Glas-Metall-Verbindung vorgesehen.

Die defokussierte Strahlung trägt zur Erwärmung der Glas-Metall-Verbindung bei, nicht aber zur Erwärmung des Thermoöls, so dass sie keinen Beitrag zur Erzeugung von elektrischer Energie leistet. Mit steigendem Anteil der defokussierten Strahlung sinkt daher der Wirkungsgrad des Sonnenkollektors. Aus der US 4,432,345, der US 4,273,104 und der DE 198 40 181 A1 sind Sekundärspiegel bekannt, die in der dem Kollektorspiegel abgewandten Hälfte des Absorberrohres im Ringraum angeordnet sind, um den Wirkungsgrad des Sonnenkollektors zu erhöhen.

Aufgabe der vorliegenden Erfindung ist es daher, die oben diskutierten Nachteile bekannter Haltevorrichtungen aus dem Stand der Technik zumindest zu reduzieren und so weiterzuentwickeln, dass die Erwärmung des Gettermaterials zumindest reduziert und eine einfache Fertigung und Montage des Absorberrohres ermöglicht wird, wobei die Haltevorrichtung sowohl mit Gettermaterial als auch mit einem Behälter, der mit Gettermaterial und/oder Schutzgas gefüllt ist, bestückbar und das Gettermaterial beliebig anzuordnen sein soll.

Weiterhin ist es Aufgabe der vorliegenden Erfindung, den Nachteilen bekannter Absorberrohrkonzepte, insbesondere der Verringerung der Kapazität der Gettermaterialien für freien Wasserstoff und der Erwärmung der Glas-Metall-Verbindung durch defokussierte Strahlung und dem damit einhergehenden Verlust der defokussierten Strahlung zu begegnen.

Gelöst wird die Aufgabe durch ein Absorberrohr mit den Merkmalen des Anspruchs 1. Das Absorberrohr ist dadurch gekennzeichnet, dass im Ringraum (26) ein Gettermaterial (46) zum Binden von sich im Ringraum (26) befindendem freien Wasserstoff angeordnet ist, und dass der Reflektor (94) ein Gehäuse (90) mit einem Ablageabschnitt (92) zum Befestigen und zum Schützen des Gettermaterials (46) vor der Strahlung (14) aufweist.

Ein Reflektor kann beispielsweise aus einem plattenförmigen Blechstück bestehen, ohne dabei ein Gehäuse aufzuweisen. Erst wenn der Reflektor so gestaltet ist, dass er einen zumindest teilweise von der Wandung umschlossenen und verschließbaren Abschnitt bereitstellt, in welchem ein Gegenstand, beispielsweise das Gettermaterial, gelagert und geschützt werden kann, soll er definitionsgemäß ein Gehäuse umfassen.

Im Idealfall ist der Kollektorspiegel so ausgestaltet, dass er die gesamte Strahlung, insbesondere die Sonnenstrahlung, auf das Metallrohr reflektiert, die dort zur Erhitzung des Wärmeträgermediums beitragen kann. Aufgrund von Fertigungsungenauigkeiten oder von im Betrieb des Sonnenkollektors auftretenden mechanischen Einwirkungen wie Wind und Hagel kann es jedoch dazu kommen, dass ein Teil der vom Kollektorspiegel reflektierten Strahlung das Metallrohr verfehlt und nicht zur Erhitzung des Wärmeträgermediums beitragen kann. Dieser Teil der Strahlung (defokussierte Strahlung) bleibt daher ungenutzt, was den Wirkungsgrad des Absorberrohres und damit des Sonnenkollektors herabsetzt. Erfindungsgemäß wird mithilfe des im Ringraum angeordneten Reflektors der Teil der Strahlung, der das Metallrohr nach der Reflexion mittels des Kollektorspiegels verfehlt, in das Metallrohr reflektiert. Dieser Teil der Strahlung kann nun zur Erhitzung des Wärmeträgermediums beitragen und geht nicht ungenutzt verloren. Ungenauigkeiten in der Fertigung des Kollektorspiegels oder im Betrieb des Sonnenkollektors auftretende Störungen führen erfindungsgemäß nicht oder zumindest zu einer weniger starken Herabsetzung des Wirkungsgrades des Absorberrohres.

Der Ablageabschnitt des Gehäuses des Reflektors dient zum Aufnehmen des Gettermaterials, welches gleichzeitig vor der Strahlung geschützt wird. Es sind keine weiteren Baueinheiten für das Gettermaterial vorgesehen, was zu einer Vereinfachung des Aufbaus und damit zu einer kostengünstigeren Fertigung des Absorberrohres führt.

In einer Weiterbildung umfasst das erfindungsgemäße Absorberrohr eine zwischen dem Hüllrohr und dem Metallrohr verlaufende, zumindest abschnittsweise metallische Wandung zum Abdichten des Ringraums, wobei die Wandung über eine Glas-Metall-Verbindung in das Hüllrohr übergeht und der Reflektor so angeordnet ist, dass er die Glas-Metall-Verbindung vor der Strahlung schützt. Erfindungsgemäß wird der Reflektor so angeordnet, dass die Glas-Metall-Verbindung vor defokussierter Strahlung geschützt und somit weniger stark von dieser erwärmt wird. Wie zuvor erwähnt, sind zu starke Erwärmungen und Temperaturschwankungen der Glas-Metall-Verbindung häufig die Ursache ihres Versagens, was ein Verlust des Vakuums im Ringraum zur Folge hat. Der Schutz der Glas-Metall-Verbindung mit der erfindungsgemäßen Anordnung des Reflektors bewirkt eine Aufrechterhaltung der Funktionstüchtigkeit und der Leistungsfähigkeit des Sonnenkollektors.

Vorzugsweise umfasst der Reflektor eine am Gehäuse auf- oder angebrachte reflektierende Schicht. Dies kann beispielsweise als eine reflektierende Folie realisiert werden, die auf das Gehäuse aufgebracht wird. Eine entsprechende Beschichtung des Gehäuses ist ebenfalls denkbar. Die reflektierende Schicht kann daher bereits bei der Fertigung des Gehäuses aufgebracht werden, aufwendige Befestigungsmaßnahmen sind nicht erforderlich, ferner kann auf die Verwendung von separaten Befestigungsmitteln verzichtet werden. Ebenfalls denkbar ist die Verwendung eines hoch reflektierenden Werkstoffes für das Gehäuse.

Weiterhin umfasst der Reflektor eine polierte Oberfläche. Diese polierte Oberfläche kann ein Teil der Gehäuseoberfläche sein. In dieser Ausbildung kann auf zusätzliche reflektierende Bauteile verzichtet werden, was eine Vereinfachung der Herstellung des Reflektors zur Folge hat.

In einer vorteilhaften Ausgestaltung der Erfindung umfasst der Ablageabschnitt eine oder mehrere Vertiefungen, in welche das Gettermaterial einbringbar ist. Hierdurch kann auf konstruktiv einfache Weise die Position des Gettermaterials im Gehäuse und damit seine Position in Bezug auf den Reflektor festgelegt werden. Die Vertiefung kann in Form einer gefrästen, gestanzten oder durch Biegung entstandenen Nut oder Falte erzeugt werden. Die Anzahl und Größe der Vertiefungen kann an die benötigte Menge des Gettermaterials angepasst werden. Mittels dieser Vertiefungen kann das Verrutschen des Gettermaterials insbesondere während der Montage des Absorberrohres oder der Wartung des Sonnenkollektors verhindert werden.

Vorteilhafterweise ist die Vertiefung durch einen Verschluss verschließbar. Dieser Verschluss kann beispielsweise als Netz ausgeführt werden. Zu beachten ist dabei, dass der Verschluss die Zugänglichkeit des Gettermaterials für den sich im Ringraum befindenden freien Wasserstoffes möglichst wenig beschränkt. Durch den Verschluss wird verhindert, dass das Gettermaterial aus der Vertiefung austritt. Das Gettermaterial wird üblicherweise in Form von gepressten, zylinderförmigen Stücken, auch als Pills bezeichnet, geliefert und verwendet. Alternativ kann das Gettermaterial auch in andere Formen gepresst werden, so dass bei der Wahl der Form des gepressten Gettermaterials auch die Form des Reflektors berücksichtigt werden kann. Bei der Anlagerung von freiem Wasserstoff an das Gettermaterial entstehen Hydride, die durch eine Volumenvergrößerung eine Partikulierung der Pills verursachen können. Die Partikel können sich dann unkontrolliert im Ringraum verbreiten und durch die Strahlung erhitzt werden. Dies führt dort zu lokalen Temperaturerhöhungen (hot spots), was sich nachteilig auf die Lebensdauer und den Wirkungsgrad des Absorberrohres auswirkt. Insbesondere wird das aus Glas gefertigte Hüllrohr durch die hot spots beschädigt. Dies kann durch das Vorsehen eines Verschlusses verhindert werden.

In einer vorteilhaften Ausgestaltung der erfindungsgemäßen Vorrichtung ist das Gehäuse an der Wandung befestigt. In dieser Ausgestaltung ist es nicht notwendig, das Gehäuse am Metallrohr oder am Hüllrohr zu befestigen. Eine Befestigung am Metallrohr ist insbesondere deshalb nachteilig, da sich dieses während des Betriebes stark aufheizt, wodurch zum einen thermische Ausdehnungen bei der Befestigung zu berücksichtigen wären, was einen erhöhten konstruktiven Aufwand erfordert. Sofern keine entsprechenden Ausgleichseinheiten zum Ausgleichen der unterschiedlichen Längenausdehnungen vorgesehen werden, ist eine Gefahr des Verbiegens oder Abreißens des Gehäuses bei einer Befestigung am Metallrohr immer gegeben.

Die Wandung dichtet den Ringraum gegenüber der Umgebung ab. Wie bereits oben dargelegt, ist die Wandung zumindest abschnittsweise metallisch aufgebaut. Da Metalle üblicherweise eine gute Wärmeleitfähigkeit aufweisen, kann bei einer Befestigung des Gehäuses an der Wandung Wärme vom Gehäuse über die Wandung an die Umgebung abgeleitet werden. Die Erwärmung des Gettermaterials wird folglich reduziert.

In einer vorteilhaften Fortbildung der Erfindung, bei der die Wandung ein Anschlusselement und einen Faltenbalg umfasst, ist das Gehäuse am Anschlusselement oder am Faltenbalg befestigt. Faltenbälge sind typische Komponenten einer Dehnungsausgleichseinheit, mit der die unterschiedlichen Ausdehnungen des Metallrohres und des Hüllrohres im Betrieb des Absorbers ausgeglichen werden und gleichzeitig der Ringraum abgedichtet wird. Diese und das Anschlusselement stehen üblicherweise zumindest teilweise in wärmeleitendem Kontakt zur Umgebung des Absorberrohres. Folglich leiten diese zumindest eine bestimmte Wärmemenge an die Umgebung ab. Die abgeleitete Wärmemenge kann nicht mehr in das Gettermaterial gelangen und dieses erwärmen.

In einer bevorzugten Ausgestaltung des erfindungsgemäßen Absorberrohres, bei dem der Faltenbalg ein inneres Ende und ein äußeres Ende aufweist, ist das Gehäuse am inneren Ende befestigt. Das innere Ende zeigt in Richtung des Ringraums oder befindet sich im Ringraum. Wie eingangs dargelegt, ist man bestrebt, die Aperturfläche des Absorberrohres zu maximieren. Die Faltenbälge spielen dabei insofern eine wichtige Rolle, als sie die axiale Erstreckung der Dehnungsausgleichseinheiten mitbestimmen. Bei der Maximierung der Aperturfläche ist man bestrebt, die Faltenbälge so kurz wie möglich auszugestalten. Folglich wird die Anzahl der Falten der verwendeten Faltenbälge auf das notwendige Minimum beschränkt. Mittels der erfindungsgemäßen Befestigung des Gehäuses am inneren Ende des Faltenbalges spielen die Größe oder die Anzahl der Falten des Faltenbalges für die Unterbringung des Gettermaterials keine Rolle. Erfindungsgemäß ist unabhängig von der axialen Erstreckung der Dehnungsausgleichseinheiten, insbesondere der Faltenbälge, gewährleistet, dass stets genügend Gettermaterial im Ringraum angeordnet werden kann, da der Reflektor axial einwärts der Dehnungsausgleichseinheit angeordnet und damit unabhängig von der axialen Erstreckung ist.

In einer bevorzugten Ausgestaltung der vorliegenden Erfindung, bei der die Wandung einen Außenring und ein Anschlusselement umfasst, ist das Gehäuse am Außenring oder am Anschlusselement befestigt. Außenringe sind typische Komponenten einer Dehnungsausgleichseinheit, mit der die unterschiedlichen Ausdehnungen des Metallrohres und des Hüllrohres im Betrieb des Absorbers ausgeglichen werden und gleichzeitig der Ringraum abgedichtet wird. Diese stehen üblicherweise zumindest teilweise in wärmeleitendem Kontakt zur Umgebung des Absorberrohres. Folglich leiten diese zumindest eine bestimmte Wärmemenge an die Umgebung ab. Die abgeleitete Wärmemenge kann das Gettermaterial nicht mehr erwärmen.

In einer bevorzugten Weiterbildung der Erfindung, bei der das Absorberrohr eine dem Kollektorspiegel zugewandte Hälfte und eine diesem abgewandte Hälfte aufweist, ist der Reflektor in der dem Kollektorspiegel abgewandten Hälfte angeordnet. Die vom Kollektorspiegel reflektierte Strahlung durchquert die ihm zugewandte Hälfte und trifft auf das Metallrohr. Das Metallrohr bewirkt in der dem Kollektorspiegel abgewandten Hälfte eine Abschattung, die weitgehend frei von Strahlung ist. Entsprechend verringert sich auch die Aufwärmung des im Gehäuse angeordneten Gettermaterials, wenn es in der abgewandten Hälfte angeordnet wird.

In der dem Kollektorspiegel abgewandten Hälfte bewirkt der Reflektor keine Abschattung der Strahlung, so dass die Aperturfläche auf der hauptsächlich relevanten dem Kollektorspiegel zugewandten Hälfte nicht verringert wird. Weiterhin kann der Reflektor defokussierte Strahlung auf das Metallrohr zurücklenken. Das Absorberrohr kann in dieser Anordnung des Reflektors mit einem erhöhten Wirkungsgrad betrieben werden.

Vorzugsweise umfasst der Reflektor einen oder mehrere reflektierende planare Abschnitte. Mittels der planaren Abschnitte kann der Reflektor besonders einfach aufgebaut werden, ohne dass sein Wirkungsgrad nennenswert verringert wird. Zwar kann der Reflektor auch gewölbte Abschnitte umfassen, jedoch sind diese einerseits schwieriger zu fertigen und müssen andererseits genauer eingebaut werden, damit die reflektierte Strahlung tatsächlich in das Metallrohr reflektiert wird. Diese Ausbildung des Reflektors benötigt keinen derart genauen Einbauort.

Es findet keine direkte Wärmeleitung zwischen dem Metallrohr und der Haltevorrichtung statt. Eine Wärmeleitung findet nur über weitere Bauteile statt, an denen die Haltevorrichtung befestigt ist. Je länger der Weg der Wärmeleitung ist, desto geringer ist die Wärmeübertragung, so dass die Erwärmung des Gettermaterials verringert wird. Die Wandung ist thermisch weitgehend vom Metallrohr entkoppelt, so dass sie sich im Betrieb des Absorberrohres kaum erwärmt. Dadurch, dass die Haltevorrichtung an der Wandung befestigt ist, kann keine oder nur eine geringe Wärmemenge in das Gettermaterial gelangen, so dass dieses im Betrieb auch nicht oder nur in einem geringen Umfang erwärmt wird.

Ferner müssen die unterschiedlichen Längenausdehnungen infolge der Erwärmung des Metallrohres und der Haltevorrichtung nicht berücksichtigt werden. Da die Haltevorrichtung nicht am Metallrohr befestigt ist, kann sie sich unabhängig vom Metallrohr ausdehnen, ohne dass es zu Beschädigungen kommt.

Die Wandung des Absorberrohres kann einen Außenring aufweisen, ein Übergangselement und/oder ein Anschlusselement, wobei die Haltevorrichtung am Außenring, am Übergangselement oder am Anschlusselement befestigt ist. Außenringe, Übergangselemente und Anschlusselemente sind typische Komponenten einer Dehnungsausgleichseinheit, mit der die unterschiedlichen Ausdehnungen des Metallrohres und des Hüllrohres im Betrieb des Absorbers ausgeglichen werden und gleichzeitig der Ringraum abgedichtet wird.

Vorzugsweise umfasst die Wandung einen Faltenbalg, wobei die Haltevorrichtung am Faltenbalg befestigt ist. Viele Dehnungsausgleichseinheiten umfassen ebenfalls einen Faltenbalg, der die axialen Verschiebungen infolge der unterschiedlichen Ausdehnungen des Metallrohres und des Hüllrohres ausgleicht. Es ist möglich, die Haltevorrichtung ringförmig um das Metallrohr anzuordnen, ohne dass weitere Befestigungsmaßnahmen ergriffen werden müssen. Dabei kann die Haltevorrichtung durch Befestigungsmittel am Faltenbalg fixiert oder eingehängt werden. Da der Faltenbalg üblicherweise aus einem lichtundurchlässigen Material wie Metall gefertigt ist, schützt er in dieser Anordnung das Gettermaterial zumindest einseitig vor solarer Strahlung, was ebenfalls zu einer Reduzierung der Erwärmung des Gettermaterials führt.

Die Haltevorrichtung kann einen ersten und einen zweiten Bereich und das Absorberrohr eine dem Kollektorspiegel zugewandte Hälfte und eine diesem abgewandte Hälfte aufweisen. Dabei sind im ersten Bereich das Gettermaterial oder ein erster, mit dem Gettermaterial gefüllter Behälter und im zweiten Bereich ein zweiter, mit Schutzgas gefüllter Behälter angeordnet, wobei sich der erste Bereich in der dem Kollektorspiegel abgewandten Hälfte und der zweite Bereich in der dem Kollektorspiegel zugewandten Hälfte befinden.

Die dem Kollektorspiegel abgewandte Hälfte wird durch das Metallrohr abgeschattet, so dass der erste Bereich nicht der fokussierten Sonnenstrahlung ausgesetzt ist. Folglich erwärmt sich das Gettermaterial nicht oder nur sehr geringfügig, weshalb seine Aufnahmekapazität für freien Wasserstoff nicht herabgesetzt wird.

Das Schutzgas, welches sich im zweiten Behälter befindet, ist nicht besonders temperaturempfindlich. Der zweite Behälter ist so ausgestaltet, dass er durch eine äußere Einwirkung, beispielsweise eine Wärmeeinwirkung, geöffnet werden kann, so dass das Schutzgas ausströmt und sich im Ringraum verteilt. Schutzgase, etwa Kohlendioxid oder Edelgase, weisen eine sehr geringe Wärmeleitfähigkeit auf, so dass sie trotz einer relativ hohen Wasserstoffkonzentration die Wärmeleitung durch den Ringraum verringern, was wiederum die Wärmeverluste des Absorberrohres begrenzt.

Die Haltevorrichtung kann einen Aufnahmeabschnitt zum Aufnehmen des Gettermaterials oder des Behälters umfassen, wobei der Aufnahmeabschnitt ringförmig ausgestaltet ist und ein Strahlungsschutzschild gegen solare Strahlung und Wärmestrahlung aufweist. Mithilfe der ringförmigen Ausgestaltung kann das Gettermaterial beliebig um das Metallrohr herum im Ringraum des Absorberrohres angeordnet werden. Der Aufnahmeabschnitt und damit die Haltevorrichtung kann einstückig ausgeführt sein, was die Montage im Ringraum erleichtert. Der Strahlungsschutzschild schützt das Gettermaterial vor solarer Strahlung, welche entweder von der Sonne direkt in das Absorberrohr gelangt oder vom Kollektorspiegel zum Absorberrohr hin reflektiert wird. Ferner wird die Wärmestrahlung, die nicht direkt von der Sonne ausgeht, sondern beispielsweise vom heissen Metallrohr, ebenfalls daran gehindert, das Gettermaterial zu erwärmen.

Auf diese Weise werden die Erwärmung des Gettermaterials und die damit einhergehende Abnahme der Aufnahmekapazität des Gettermaterials für freien Wasserstoff verringert. Die Haltevorrichtung kann auch mehrere Strahlungsschutzschilde aufweisen, die beispielsweise von der Längsachse des Absorberrohres gesehen radial nach außen beabstandet zueinander angeordnet sind. Je nach Position des Gettermaterials in der Haltevorrichtung übernehmen einmal der erste und einmal der zweite Strahlungsschutzschild einen mehr oder weniger großen Anteil des Tragens des Gettermaterials. Ferner kann ein separater Strahlungsschutzschild vorgesehen sein, der von der Längsachse des Absorberrohres radial nach außen gesehen innerhalb der Haltevorrichtung angeordnet ist und keine tragende Funktion hat. Er kann thermisch entkoppelt an der Haltevorrichtung oder am Metallrohr oder an der Wandung angebracht werden und weist solare Strahlung ab, bevor sie die Haltevorrichtung erreichen kann.

Die Haltevorrichtung kann ein hochreflektierendes Metall umfassen und/oder die Haltevorrichtung kann eine reflektierende Schicht zum Reflektieren von solarer Strahlung aufweisen. Auf diese Weise wird die Strahlung, welche auf die reflektierende Schicht der Haltevorrichtung trifft, nicht oder nur in sehr geringem Maße absorbiert, weshalb sich die Haltevorrichtung und damit auch das Gettermaterial weniger stark erwärmen können. Darüber hinaus kann die reflektierte Strahlung zum Metallrohr geleitet werden, wo sie zur Erwärmung des Wärmeträgermediums beitragen kann, so dass diese Strahlung nicht verloren geht.

Die Haltevorrichtung kann eine Hülle zum Schützen des Gettermaterials vor solarer Strahlung aufweisen. Die Hülle kann beispielsweise als Drahtgewebe ausgestaltet sein. Sie übernimmt dabei keine isolierende Funktion, sondern reduziert die Menge der auf das Gettermaterial eindringenden solaren Strahlung, etwa durch Abschattung. Daher ist die Hülle zumindest teilweise aus lichtundurchlässigem Material aufgebaut. Um dennoch die Zugänglichkeit des Gettermaterials für den freien Wasserstoff nicht zu erschweren, weist die Hülle kleine Löcher auf, die beispielsweise gelasert werden können.

Die Hülle kann einen reflektierenden Abschnitt zum Reflektieren von solarer Strahlung umfassen. Solare Strahlung, die auf die Hülle trifft, erwärmt die Hülle nicht oder nur zu einem sehr geringen Teil und wird zurückgeworfen, beispielsweise zum Metallrohr, wo sie zur Erwärmung des Wärmeträgermediums beiträgt. Die solare Strahlung wird daher effektiver genutzt.

Die Haltevorrichtung, die ein erstes und ein zweites Ende aufweist, ist ein Verbindungselement zum Verbinden des ersten und des zweiten Endes vorgesehen. In dieser Fortbildung ist die Haltevorrichtung durch Verwendung der ersten Feder flexibel. Mit dem Verbindungselement kann die Haltevorrichtung zu einer Torus-ähnlichen Einheit geschlossen werden.

Das Absorberrohr kann einen im Ringraum angeordneten Reflektor zum Reflektieren von Strahlung, insbesondere von Sonnenstrahlung, in das Metallrohr umfassen. Der Reflektor kann als ein eigenständiges Bauteil ausgeführt und so ausgestaltet sein, dass ein besonders großer Anteil der defokussierten Strahlung zum Metallrohr reflektiert wird. Weiterhin können bestimmte optische Eigenschaften, beispielsweise ein bestimmter Verlauf der Wölbung des Reflektors berücksichtigt werden, um eine Bündelung der Strahlung zu realisieren, was bei der reflektierenden Schicht der Haltevorrichtung nicht oder nur mit großem Aufwand realisierbar ist.

Das Absorberrohr kann eine zwischen dem Hüllrohr und dem Metallrohr verlaufende, zumindest abschnittsweise metallische Wandung zum Abdichten des Ringraums umfassen, wobei die Wandung über eine Glas-Metall-Verbindung in das Hüllrohr übergeht und der Reflektor oder die Haltevorrichtung so angeordnet sind, dass sie die Glas-Metall-Verbindung vor der Strahlung schützen. Die Glas-Metall-Verbindung ist besonders empfindlich gegenüber Temperatur-schwankungen, die zu einem Versagen der Glas-Metall-Verbindung führen können. Ein Versagen zieht einen Verlust des Vakuums im Ringraum nach sich, was eine spürbare Verringerung des Wirkungsgrades des Sonnenkollektors hervorruft. Der Reflektor und die Haltevorrichtung sind so angeordnet, dass sie die Glas-Metall-Vorrichtung abschatten und so eine Erwärmung durch defokussierte Strahlung verringern. Dies führt zu einer verminderten Belastung der Glas-Metall-Verbindung, so dass sie länger betrieben werden kann.

Die Erfindung wird nun im Detail anhand von bevorzugten Ausführungsbeispielen unter Bezugnahme auf die beigefügten Figuren erläutert, wobei die Figuren 2 bis 12 nicht erfindungsgemäße Ausführungsformen zeigen.

Es zeigen:
- Figur 1: eine schematische Darstellung eines Sonnenkollektors,
- Figur 2: eine Halbschnittdarstellung durch ein erstes Ausführungsbeispiel eines Absorberrohres mit einem ersten Ausführungsbeispiel einer Haltevorrichtung,
- Figur 3: eine Schnittdarstellung des in Figur 2 gezeigten ersten Ausführungsbeispiels der Haltevorrichtung in vergrößerter Form,
- Figur 4: eine Halbschnittdarstellung durch das Absorberrohr gemäß dem ersten Ausführungsbeispiel mit einer Haltevorrichtung nach einem zweiten Ausführungsbeispiel,
- Figur 5: eine Schnittdarstellung des in Figur 4 gezeigten zweiten Ausführungsbeispiels der Haltevorrichtung in vergrößerter Form,
- Figur 6: eine Halbschnittdarstellung durch die zweite Ausführungsform des Absorberrohres mit einem dritten Ausführungsbeispiel der Haltevorrichtung,
- Figur 7: eine Teilschnittdarstellung des in Figur 6 gezeigten dritten Ausführungsbeispiels der Haltevorrichtung entlang der Längsachse in vergrößerter Form,
- Figur 8: eine Draufsicht auf das in Figur 6 und 7 gezeigte dritte Ausführungsbeispiel der Haltevorrichtung,
- Figur 9: eine Draufsicht auf ein viertes Ausführungsbeispiel der Haltevorrichtung,
- Figur 10: eine Schnittdarstellung durch das zweite Ausführungsbeispiel des Absorberrohres mit einem vierten Ausführungsbeispiel der Haltevorrichtung,
- Figur 11: eine Halbschnittdarstellung durch ein drittes Ausführungsbeispiel des Absorberrohres mit dem ersten Ausführungsbeispiel der Haltevorrichtung,
- Figur 12: eine Halbschnittdarstellung durch ein viertes Ausführungsbeispiel des Absorberrohres mit dem zweiten Ausführungsbeispiel der Haltevorrichtung,
- Figur 13: eine Halbschnittdarstellung durch die zweite Ausführungsform des Absorberrohres mit einem ersten Ausführungsbeispiel eines erfindungsgemäßen Reflektors,
- Figur 14: eine nicht maßstabsgerechte Schnittdarstellung durch ein weiteres Ausführungsbeispiel des Absorberrohres, welches dem in Figur 13 dargestelltem Ausführungsbeispiel bis auf die Abmessungen weitgehend identisch ist, entlang der in Figur 13 definierten Schnittebene A-A unter Einbeziehung des Kollektorspiegels zur Verdeutlichung des Strahlengangs,
- Figur 15: eine Schnittdarstellung durch ein Absorberrohr mit dem ersten Ausführungsbeispiel des erfindungsgemäßen Reflektors,
- Figur 16: eine Halbschnittdarstellung durch ein Absorberrohr mit einem zweiten Ausführungsbespiel des erfindungsgemäßen Reflektors, und
- Figur 17: eine nicht maßstabsgerechte Schnittdarstellung durch ein weiteres Ausführungsbeispiel des Absorberrohres, welches dem in Figur 16 dargestelltem Ausführungsbeispiel bis auf die Abmessungen weitgehend identisch ist, entlang der in Figur 16 definierten Schnittebene B-B.

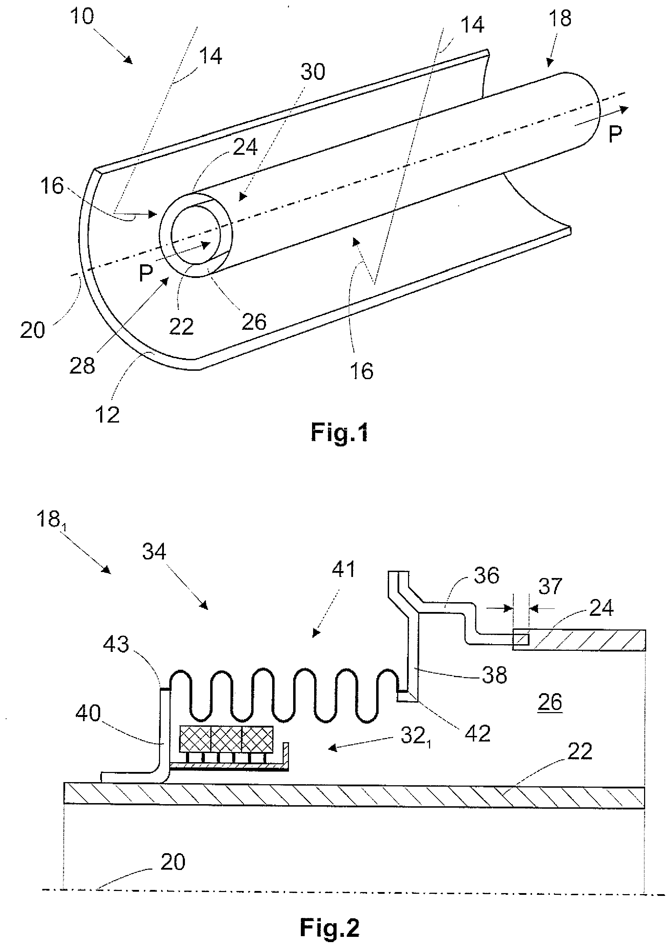

In Figur 1 ist ein Sonnenkollektor 10 der bekannten Art dargestellt. Der Sonnenkollektor 10 umfasst einen Kollektorspiegel 12, welcher die Sonneneinstrahlung 14 reflektiert und die reflektierte Sonneneinstrahlung 16 auf ein Absorberrohr 18 richtet. Der Kollektorspiegel 12 ist rinnenförmig ausgestaltet, so dass er eine Fokussierung der reflektierten Sonnenstrahlung entlang einer Brennlinie bewirkt, die durch die Längsachse 20 des Absorberrohres 18 verläuft. Das Absorberrohr 18 weist ein Metallrohr 22 und ein Hüllrohr 24 auf. Das Metallrohr 22 ist mit einer strahlungsabsorbierenden Schicht (nicht dargestellt) beschichtet und wird von einem Wärmeträgermedium durchströmt. Das Hüllrohr 24 umschließt das Metallrohr 22, so dass ein Ringraum 26 zwischen dem Metallrohr 22 und dem Hüllrohr 24 gebildet wird. Das Hüllrohr 24 besteht typischerweise aus Glas. Aufgrund der rinnenförmigen Ausgestaltung des Kollektorspiegels 12 kann das Absorberrohr 18 in eine dem Kollektorspiegel 12 zugewandte Hälfte 28 und eine ihm abgewandte Hälfte 30 unterteilt werden.

Die Strömungsrichtung des Wärmeträgermediums ist durch die Pfeile P₁ angedeutet. Beim Durchströmen des Metallrohres 22 wird das Wärmeträgermedium durch die reflektierte Sonnenstrahlung 16 erhitzt. Die erreichbare Temperatur beträgt ca. 400° C. Das erhitzte Wärmeträgermedium wird einem hier nicht näher dargestellten Prozess zugeführt, in dem elektrische Energie gewonnen wird. Die dem Kollektorspiegel 12 abgewandte Hälfte 30 des Absorberrohres 18 wird durch Mischkonvektion, also durch natürliche Konvektion, und beispielsweise durch Wind erzwungene Konvektion abgekühlt, was zu Wärmeverlusten führt und daher den Erhitzungsprozess des Wärmeträgermediums verschlechtert. Daher ist man bestrebt, die Wärmeleitung vom Metallrohr 22 nach außen so weit wie möglich zu reduzieren, was mithilfe des mit dem Hüllrohr 24 gebildeten Ringraumes 26 geschieht. Dieser kann entweder evakuiert oder mit einem Schutzgas gefüllt werden. Ebenfalls möglich ist eine Kombination aus beiden Maßnahmen. Beide Maßnahmen führen dazu, dass die Wärmeleitung durch den Ringraum 26 verringert wird, wodurch die Wärmeverluste begrenzt werden.

In Figur 2 ist ein erstes Absorberrohr 18 mit einem ersten nicht erfindungsgemäßen Ausführungsbeispiel einer Haltevorrichtung 32₁ in einer Halbschnittdarstellung gezeigt. Der Ringraum 26 wird in Richtung der Längsachse 20 mit einer Wandung 34 abgedichtet, die im dargestellten Ausführungsbeispiel ein am Hüllrohr 24 befestigtes Übergangselement 36, einen Außenring 38 und ein Anschlusselement 40 umfasst. Am Übergang des Übergangselements 36 in das Hüllrohr 24 ist eine Glass-Metall-Verbindung 37 vorgesehen. Zum Ausgleichen der axialen Verschiebungen des Hüllrohres 24 relativ zum Metallrohr 22, die durch die unterschiedlichen Ausdehnungen im Betrieb des Absorberrohr 18 hervorgerufen werden, ist zwischen dem Außenring 38 und dem Anschlusselement 40 ein Faltenbalg 41 angeordnet, der entsprechend gestaucht oder gedehnt wird. Der Außenring 38 kann auch auf dem Anschlusselement 40 aufliegen, wobei er allerdings axial auf dem Anschlusselement 40 verschiebbar ist, so dass er die Ausdehnungen auf den Faltenbalg 41 übertragen kann. Der Faltenbalg 41 weist ein inneres, zum Ringraum 26 hin weisendes Ende 42 und ein äußeres, vom Ringraum 26 weg weisendes Ende 43 auf. In diesem Ausführungsbeispiel sind das Anschlusselement 40 mit dem äußeren Ende 43 und der Außenring 38 mit dem inneren Ende 42 des Faltenbalges 41 verbunden.

Die Haltevorrichtung 32₁ ist in diesem Beispiel radial von der Längsachse 20 ausgehend innerhalb des Faltenbalges 41 am Anschlusselement 40 befestigt, kann aber auch am Übergangselement 36 oder am Außenring 38 befestigt sein. Der Faltenbalg 41 ist üblicherweise aus lichtundurchlässigem Material wie Metall gefertigt. Die Anordnung der Haltevorrichtung 32₁ nutzt daher die abschattende Wirkung des Faltenbalgs 41 aus, so dass die Haltevorrichtung 32₁ zumindest einseitig vor solarer Strahlung geschützt wird, was eine Erwärmung reduziert. In jedem Fall ist die Haltevorrichtung 32₁ im Ringraum 26 angeordnet, ohne dass ein direkter Kontakt zum Metallrohr 22 besteht. Auf direktem Wege kann daher keine Wärme konduktiv vom Metallrohr 22 in die Haltevorrichtung 32₁ transportiert werden, so dass auch hierdurch die Erwärmung der Haltevorrichtung 32₁ reduziert wird.

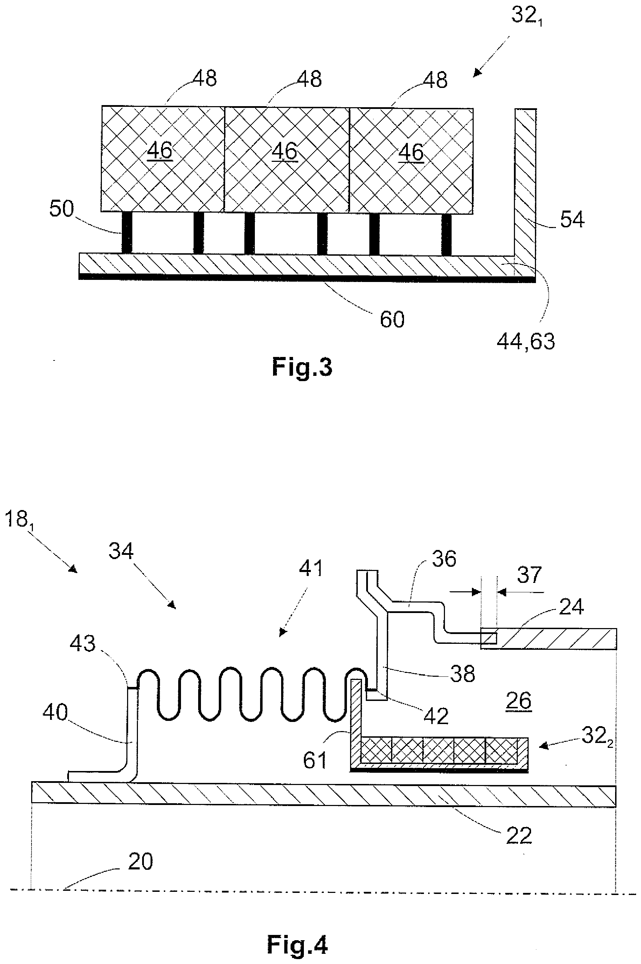

In Figur 3 ist das in Figur 2 gezeigte nicht erfindungsgemäße Ausführungsbeispiel der Haltevorrichtung 32₁ vom Absorberrohr 18 isoliert und vergrößert dargestellt. In diesem nicht erfindungsgemäßen Ausführungsbeispiel weist die Haltevorrichtung 32₁ einen Aufnahmeabschnitt 44 auf, welcher ein Gettermaterial 46 oder einen mit Gettermaterial 46 gefüllten Behälter 48 aufnehmen kann. Das Gettermaterial 46 kann in Pulverform in den Behälter 48 gefüllt werden. Alternativ kann das Gettermaterial 46 zu Portionen gepresst werden, üblicherweise mit zylindrischer Form. In diesem Fall kann auf den Behälter 48 verzichtet werden.

Sowohl das zu Portionen gepresste Gettermaterial 46 als auch die Behälter 48 können auf Abstandselementen 50 stehen. Diese Abstandselemente 50 dienen dazu, die Wärmeleitung zum Gettermaterial 46 zu verhindern. Der Aufnahmeabschnitt 44 weist einen Begrenzungsabschnitt 54 auf, der verhindert, dass das Gettermaterial 46 oder die mit Gettermaterial befüllten Behälter 48 vom Aufnahmeabschnitt 44 herunter rutschen.

In dieser nicht erfindungsgemäßen Ausführungsform ist die Haltevorrichtung 32₁ geschlossen und ringförmig ausgestaltet, so dass sie das Metallrohr vollständig umschließen kann. In diesem Fall kann ein weiterer Aufnahmeabschnitt 44 radial gesehen außerhalb vom Aufnahmeabschnitt 44 vorgesehen werden, der dann das Herausfallen des Gettermaterials 46 verhindert (nicht dargestellt).

Weiterhin ist die Haltevorrichtung 32, wie in Figur 2 gezeigt, am Anschlusselement 40 befestigt. Dieses wiederum steht in Kontakt mit dem Metallrohr 22 und umschließt dieses gasdicht, wofür spezielle und hier nicht gezeigte Dichtungen vorgesehen sind. Diese Dichtungen bestehen üblicherweise aus einem schlecht wärmeleitenden Material, so dass das Anschlusselement 40 thermisch weitgehend entkoppelt vom Metallrohr 22 ist. Um dennoch die Wärmeleitung so weit wie möglich zu reduzieren, ist man bestrebt, die Kontaktfläche zwischen dem Aufnahmeabschnitt 44 und dem Anschlusselement 40 so klein wie möglich zu halten. Dies kann beispielsweise dadurch geschehen, dass die Haltevorrichtung 32₁ punktweise mit dem Anschlusselement 40 verbunden wird. Damit wird erreicht, dass nur eine geringe Wärmeleitung vom Anschlusselement 40 hin zum Gettermaterial 46 oder zum mit dem Gettermaterial 46 gefüllten Behälter 48 erfolgen kann.

Ferner umfasst die Haltevorrichtung 32₁ eine reflektierende Schicht 60, welche zum Metallrohr 22 hin weist und am Aufnahmeabschnitt 44 befestigt ist. Die reflektierende Schicht 60 lenkt Sonnenstrahlen, die das Metallrohr 22 verfehlt oder gestreift haben und auf die reflektierende Schicht 60 fallen, zum Metallrohr 22 zurück. Dadurch wird zum einen verhindert, dass die Haltevorrichtung 32₁ die Sonnenstrahlen absorbiert, was zu einer Erwärmung des Gettermaterials 46 führen könnte, zum anderen können die reflektierten Strahlen im Metallrohr 22 zur Erwärmung des Wärmeträgermediums beitragen. Alternativ kann der Aufnahmeabschnitt 44 ganz oder teilweise als ein hochrefiektierendes Metall 60 ausgebildet sein.

In Figur 4 ist ein zweites nicht erfindungsgemäßes Ausführungsbeispiel der Haltevorrichtung 32₂ dargestellt. Es entspricht weitgehend dem ersten nicht erfindungsgemäßen Ausführungsbeispiel der Haltevorrichtung 32₁, ist allerdings nicht am Anschlusselement 40 befestigt, sondern mit Befestigungsmitteln 61 am Faltenbalg befestigt. Diese Befestigungsmittel 61 können als ein Teil des Aufnahmeabschnitts 44 ausgestaltet sein. Die Befestigungsmittel 61 können beispielsweise in eine Falte des Faltenbalges 41 eingebracht werden. Diese konstruktiv einfache Lösung bietet sich dann an, wenn die Haltevorrichtung 32₂ das Metallrohr 22 mit 180° oder mehr umschließt. Weiterhin ist die Haltevorrichtung 32₂ gemäß der zweiten nicht erfindungsgemäßen Ausführungsform länger ausgeführt als die Haltevorrichtung 32₁ nach der ersten nicht erfindungsgemäßen Ausführungsform. Insgesamt können fünf Behälter 48 von der Haltevorrichtung 32₂ aufgenommen werden. Weiterhin ist es mit der verlängerten Version möglich, die Glas-Metall-Verbindung 37 abzuschatten und so vor Erwärmung zu schützen.

Da die Haltevorrichtung 32₂ nicht mit dem Anschlusselement 40 in Kontakt steht, kann keine Wärme konduktiv vom Anschlusselement 40 in die Haltevorrichtung 32₂ und damit zum Gettermaterial 46 gelangen. Auch hier gilt, dass die Haltevorrichtung 32₂ nicht in direktem Kontakt mit dem Metallrohr 22 steht, so dass keine Wärme konduktiv vom Metallrohr 22 direkt in die Haltevorrichtung 32₂ transportiert werden kann. Die Längenausdehnung des Metallrohres 22 hat keinen Einfluss auf die Haltevorrichtung 32₂.

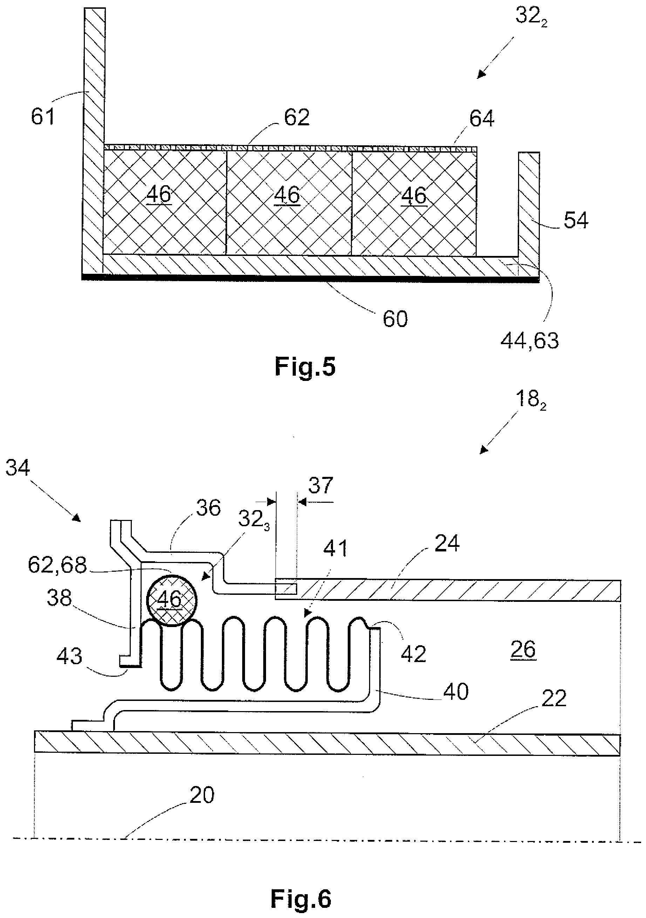

In Figur 5 ist die Haltevorrichtung 32₂ vergrößert dargestellt. Man erkennt, dass das Gettermaterial 46 von einer Hülle 62 umgeben ist, die das Gettermaterial 46 in der Haltevorrichtung 32₂ fixiert. Diese Hülle 62 kann als ein Metallgewebe oder ein Gewebestrumpf ausgebildet sein. Um die Zugänglichkeit des Gettermaterials 46 für den freien Wasserstoff zu gewährleisten, weist die Hülle 62 Löcher 64 auf.

In Figur 6 ist ein zweites Absorberrohr 18 mit einem dritten Ausführungsbeispiel der nicht erfindungsgemäßen Haltevorrichtung 32₃ dargestellt. Allerdings ist hier die Haltevorrichtung 32₃ um den Faltenbalg 41 herum gelegt. Dazu ist das Anschlusselement 40 im Gegensatz zum in Figur 2 dargestellten Beispiel mit dem inneren Ende und der Außenring 38 mit dem äußeren Ende des Faltenbalges 41 verbunden. Hierdurch wird die axiale Erstreckung der Wandung 34 reduziert, so dass ein größerer Abschnitt des Metallrohres 22 den Sonnenstrahlen ausgesetzt werden kann, was die Effizienz des Absorberrohres 18 erhöht. Weiterhin wird die Glas-Metall-Verbindung 37 vom Anschlusselement 40 und vom Faltenbalg 41 abgeschattet und vor der defokussierten Strahlung geschützt.

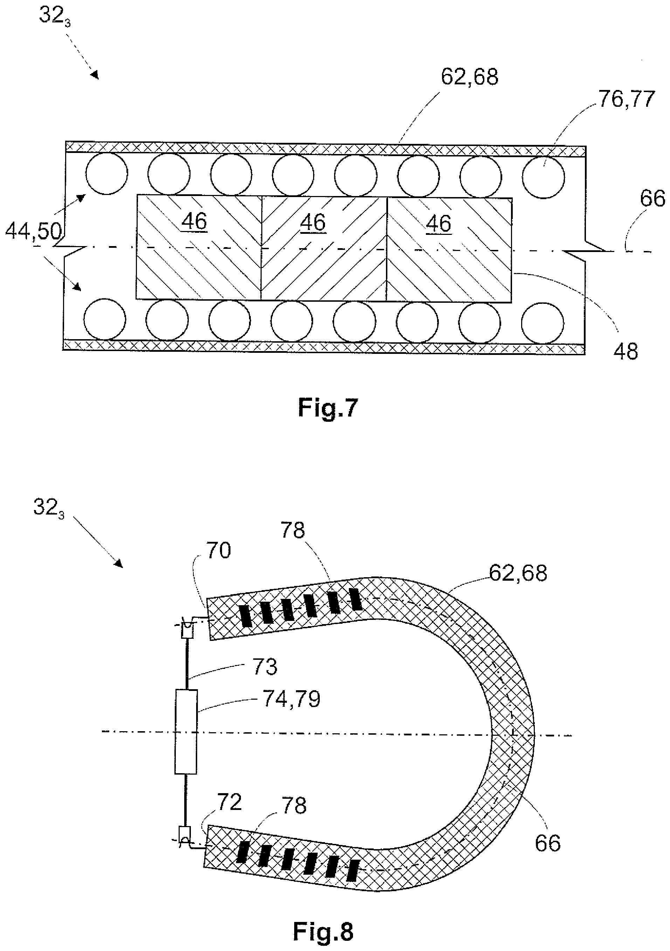

In Figur 7 ist das vierte nicht erfindungsgemäße Ausführungsbeispiel in einer Teilschnittdarstellung entlang einer Längsachse 66 (vgl. Figur 8) der Haltevorrichtung 32₃ dargestellt. Der Aufnahmeabschnitt 44 und die Befestigungsvorrichtung 50 sind hier zusammengefasst und als eine erste Feder 76 mit Windungen 77 ausgestaltet. Die Behälter 48 oder das Gettermaterial 46 sind in dem von den Windungen 77 umschlossenen Raum angeordnet und werden von ihnen gehalten. Durch die Verwendung der ersten Feder 76 kann die Längsachse 66 der Haltevorrichtung 32₃ gebogen werden.

Die Hülle 62 ist in diesem nicht erfindungsgemäßen Ausführungsbeispiel als ein Drahtgewebe 68 ausgeführt, das über die erste Feder 76 gezogen wird. Das Drahtgewebe 68 schützt das Gettermaterial 46 durch Abschattung vor Sonnenstrahlen, garantiert aber gleichzeitig, dass der freie Wasserstoff gut an das Gettermaterial 46 gelangen kann. Das Drahtgewebe 68 verringert nicht die Wärmeleitung zum Gettermaterial 46.

In Figur 8 ist das dritte Ausführungsbeispiel der nicht erfindungsgemäßen Haltevorrichtung 32₃ in einer Draufsicht gezeigt. Die Haltevorrichtung 32₃ weist ein erstes Ende 70 und ein zweites Ende 72 auf, welche mit einem Verbindungselement 73 verbunden sind, so dass die erste Feder 76 gebogen wird. Das Verbindungselement 73 weist ein Vorspannelement 74 auf, welches eine Vorspannkraft ausübt, wenn es gestreckt wird. Das Vorspannelement 74 ist hier als eine dritte Feder 79 ausgeführt. Die Länge der Haltevorrichtung 32₃ oder des Verbindungselements 73 ist dabei so gewählt, dass das erste und das zweite Ende 70, 72 bei der Montage, beispielsweise wenn es um den Faltenbalg 41 herum montiert wird, wie in Figur 6 dargestellt, voneinander weg gezogen werden, so dass das Vorspannelement 74 gestreckt wird und eine Vorspannkraft erzeugt. Ein Teil dieser Vorspannkraft produziert eine Reibkraft zwischen der Haltevorrichtung 32₃ und dem Faltenbalg 41, so dass die Haltevorrichtung 32₃ in ihrer Position festgelegt ist. Auf dem Drahtgewebe 68 sind reflektierende Abschnitte 78 angeordnet, welche die Sonnenstrahlen reflektieren und eine Erwärmung des Gettermaterials 46 verringern.

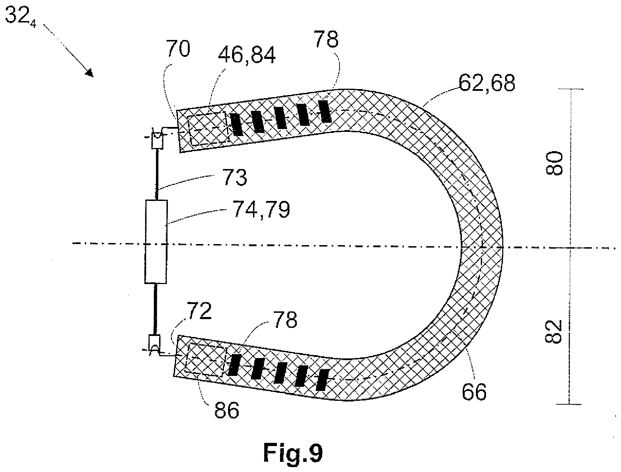

In Figur 9 ist ein viertes Ausführungsbeispiel der nicht erfindungsgemäßen Haltevorrichtung 32₄ dargestellt. Es ist im Wesentlichen so aufgebaut wie das in Figur 7 und 8 dargestellte nicht erfindungsgemäße Ausführungsbeispiel. Allerdings ist hier die Haltevorrichtung 32₄ in einen ersten Bereich 80 und in einen zweiten Bereich 82 unterteilt. Im ersten Bereich 80 befinden sich das Gettermaterial 46 oder ein oder mehrere erste, mit dem Gettermaterial 46 gefüllte Behälter 84, während im zweiten Bereich 82 ein oder mehrere zweite, mit Schutzgas gefüllte Behälter 86 angeordnet sind.

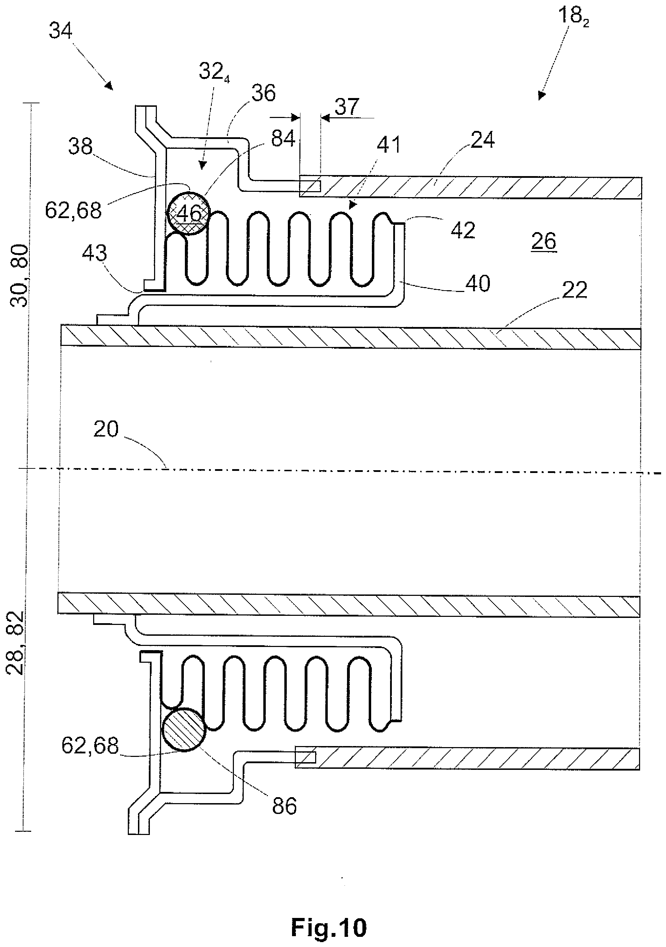

In Figur 10 ist ein Absorberrohr 18 mit dem vierten Ausführungsbeispiel der nicht erfindungsgemäßen Haltevorrichtung 32₄ dargestellt. Die Haltevorrichtung 32₄ ist dabei so angeordnet, dass sich der erste Bereich 80 in der vom Kollektorspiegel 12 abgewandten Hälfte 30 und der zweite Bereich 82 in der vom Kollektorspiegel 12 zugewandten Hälfte 28 des Absorberrohres 18 befindet. Auf die abgewandte Hälfte 30 trifft keine vom Kollektorspiegel 12 kommende konzentrierte Solarstrahlung. Folglich wird das in der abgewandten Hälfte 30 befindliche Gettermaterial 46 nicht von der Sonnenstrahlung erwärmt, so dass seine Aufnahmekapazität für den freien Wasserstoff nicht herabgesetzt wird. Dabei ist beispielsweise die Anordnung des zweiten Behälters 86 in der dem Kollektorspiegel 12 zugewandten Hälfte 82 nicht so zu verstehen, dass er komplett in der Hälfte 82 angeordnet sein muss. Er kann zumindest teilweise auch in der abgewandten Hälfte 80 angeordnet sein.

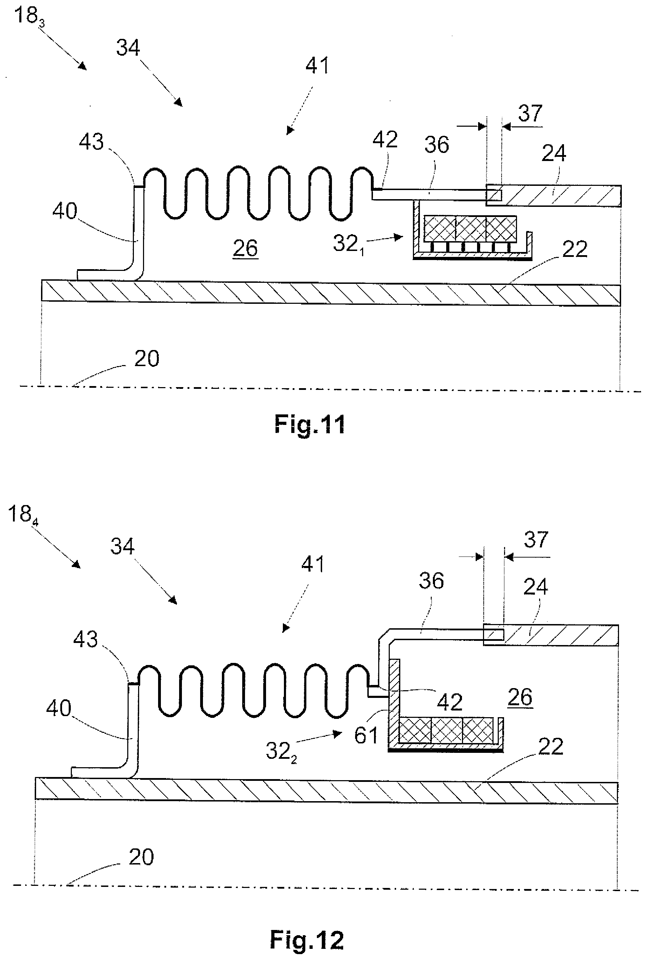

In Figur 11 ist das Absorberrohr 18₃ gemäß einer dritten nicht erfindungsgemäßen Ausführungsform dargestellt, welches weitgehend dem in Figur 2 dargestellten Absorberrohr 18₁ entspricht und eine Haltevorrichtung 32₁ gemäß dem ersten nicht erfindungsgemäßen Ausführungsbeispiel aufweist. Allerdings ist die Wandung 34 etwas anders aufgebaut. In diesem Ausführungsbeispiel weist die Wandung 34 keinen Außenring 38 auf. Vielmehr ist der Faltenbalg 41 direkt mit dem Übergangselement 36 verbunden. Das Hüllrohr 24 und der Faltenbalg 41 sind so dimensioniert, dass das Übergangselement 36 einen konstanten Durchmesser aufweist. Die Haltevorrichtung 32₁ ist so angeordnet, dass sie die Glas-Metall-Verbindung 37 abschattet.

In Figur 12 ist ein Absorberrohr 18₄ dargestellt, welches weitgehend dem in Figur 4 dargestellten Absorberrohr 18₂ entspricht und eine Haltevorrichtung 32₂ gemäß dem zweiten Ausführungsbeispiel aufweist. Aber auch hier ist die Wandung 34 anders aufgebaut. Hier ist der Faltenbalg 41 über das Übergangselement 36 direkt mit dem Hüllrohr 24 verbunden, ohne dass ein Außenring dazwischen angeordnet ist. Im Gegensatz zu dem in Figur 11 dargestellten Ausführungsbeispiel ändert sich der Durchmesser des Übergangselements 36, so dass die Durchmesser des Hüllrohres 24 und des Faltenbalges 41 nicht aufeinander abgestimmt werden müssen, da Durchmesserdifferenzen mit dem Übergangselement 36 ausgeglichen werden können.

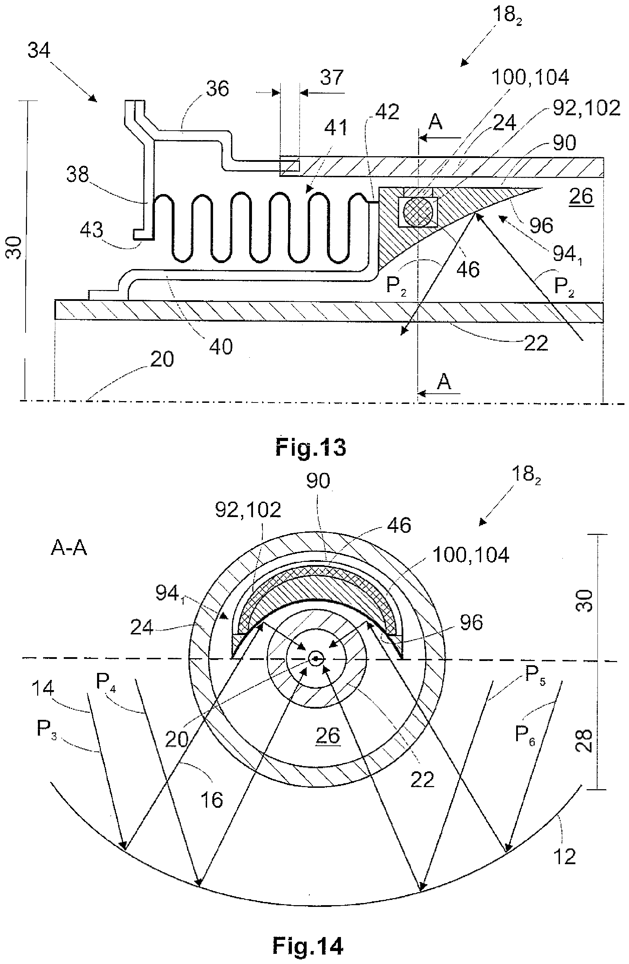

In Figur 13 ist das Absorberrohr 18₂ gemäß einem erfindungsgemäßen Ausführungsbeispiel in einer Halbschnittdarstellung gezeigt. Im dargestellten Beispiel ist am inneren Ende 42 des Faltenbalges 41 und am Anschlusselement 40 ein Reflektor 94₁ mit einem Gehäuse 90 befestigt. Der Reflektor 94₁ reflektiert die auf ihn treffende vom Kollektorspiegel 12 reflektierte Strahlung 16 (vgl. Figur 14) zum Metallrohr 22. Der Reflektor 94₁ umfasst eine auf das Gehäuse 90 aufgetragene reflektierende Schicht 96. Der Reflektor 94₁ ist konkav gewölbt. Die Reflexion der Strahlung 16 durch den Reflektor 94 ist durch die Pfeile P₂ angedeutet.

Das Gehäuse 90 weist einen Ablageabschnitt 92 auf, in welchen das Gettermaterial 46 eingebracht werden kann. Der Ablageabschnitt 92 umfasst eine Vertiefung 102 und eine Öffnung 100, durch die das Gettermaterial 46 in die Vertiefung 102 einbringbar ist. Die Öffnung 100 der Vertiefung 102 ist mit einem Verschluss 104 verschlossen, der beispielsweise als Netz ausgeführt sein kann.

In Figur 14 ist das erfindungsgemäße Ausführungsbeispiel des Absorberrohres 18₂ anhand einer Schnittdarstellung entlang der in Figur 13 definierten Schnittebene A-A nicht maßstabsgerecht dargestellt. Weiterhin ist der Kollektorspiegel 12 gezeigt. Gut zu erkennen ist der konkav gewölbte Reflektor 94₁, wobei die Wölbung elliptisch oder parabolisch oder anders verlaufen kann sowie die mit dem Gettermaterial 46 gefüllte Vertiefung 102. Weiterhin ist die Öffnung 100 zu erkennen, durch die das Gettermaterial 46 in die Vertiefung 102 eingebracht werden kann. Das Gehäuse 90 mit dem Reflektor 94₁ und dem Gettermaterial 46 sind ausschließlich in der dem Kollektorspiegel 12 abgewandten Hälfte 30 des Absorberrohres 18₂ angeordnet. Die dem Kollektorspiegel 12 zugewandte Hälfte 28 und die diesem abgewandte Hälfte 30 des Absorberrohres 18₂ sind gut erkennbar.

Zur Verdeutlichung des Strahlengangs der Sonnenstrahlen 14 sind die Pfeile P₃ bis P₆ eingezeichnet. Die Strahlen, welche entlang der Pfeile P₄ und P₅ verlaufen, treffen auf den Kollektflrspiegel 12 und werden von diesem direkt in das Metallrohr 22 reflektiert, wo sie zur Erhitzung des Wärmeträgermediums beitragen. Die Strahlen, welche entlang den Pfeilen P₃ und P₆ verlaufen, treffen ebenfalls auf den Kollektorspiegel 12. Diese werden vom Kollektorspiegel 12 beispielsweise infolge von Fertigungsungenauigkeiten des Kollektorspiegels 12 nicht in das Metallrohr 22 reflektiert (defokussierte Strahlung), sondern verfehlen dieses. Normalerweise würden diese das Hüllrohr 24 auf der dem Kollektorspiegel 12 abgewandten Hälfte 30 durchqueren und könnten nicht zur Erhitzung des Wärmeträgermediums beitragen.

Erfindungsgemäß treffen diese Strahlen jedoch auf den Reflektor 94₁, der so ausgestaltet ist, dass er die Strahlen zurück in das Metallrohr 22 reflektiert, so dass sie zur Erhitzung des Wärmeträgermediums beitragen können und nicht ungenutzt bleiben. Der Reflektor 94 und das Gettermaterial 46 sind so in Bezug zueinander positioniert, dass das Gettermaterial 46 nicht durch die defokussierte Strahlung erwärmt werden kann. Erfindungsgemäß wird zum einen erreicht, dass Strahlen, die das Metallrohr 22 verfehlen, durch den Reflektor 94₁ in das Metallrohr 22 zurück reflektiert werden und somit nicht ungenutzt bleiben, und zum anderen, dass das Gettermaterial 46 durch diese Strahlen nicht erwärmt wird, wodurch seine Aufnahmekapazität für freien Wasserstoff reduziert würde.

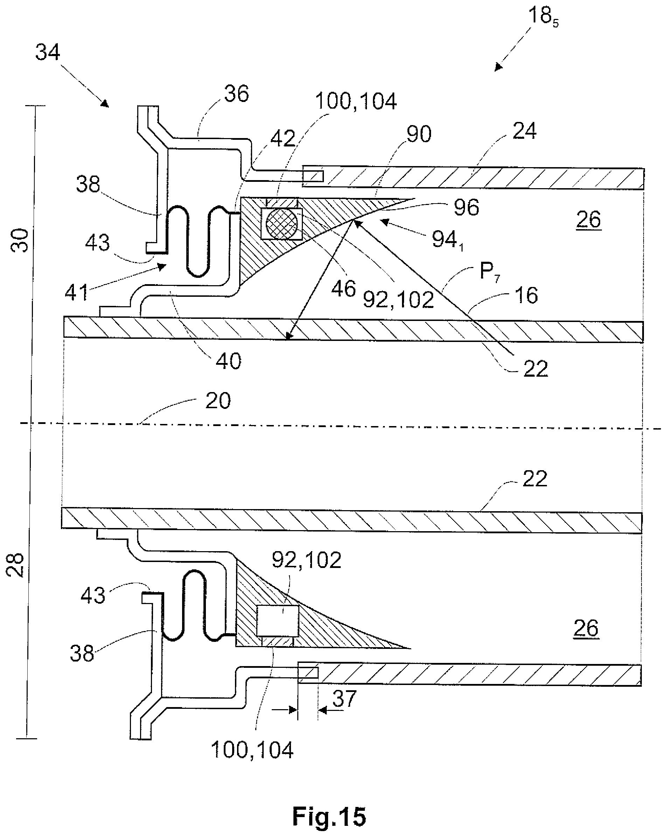

In Figur 15 ist ein fünftes Ausführungsbeispiel des erfindungsgemäßen Absorberrohres 18₅ dargestellt. Im Gegensatz zum ersten Ausführungsbeispiel umschließt hier das Gehäuse 90 und der Reflektor 94₁ das Metallrohr 22 komplett, durchläuft also sowohl die dem Kollektorspiegel 12 zugewandte und die ihm abgewandte Hälfte 28, 30 des Absorberrohres 18₅. Das Gettermaterial 46 ist allerdings nur in der abgewandten Hälfte 30 des Absorberrohres 18₅ angeordnet. Ferner ist in diesem Ausführungsbeispiel die Anzahl der Falten des Faltenbalges 41 auf das absolut notwendige Minimum reduziert. Erfindungsgemäß ist die Anordnung des Gettermaterials 46 unabhängig von der axialen Ausdehnung des Faltenbalges 41, so dass immer ausreichend Gettermaterial 46 im Gehäuse 90 untergebracht werden kann.

Das Übergangselement 36 bildet an seinem Übergang in das Hüllrohr 24 die Glas-Metall-Verbindung 37. Bei der Dimensionierung des Gehäuses 90 und seiner Anordnung innerhalb des Ringraums 26 unter Berücksichtigung der axialen Erstreckung des Faltenbalges 41 wird in diesem Ausführungsbeispiel darauf geachtet, dass die Glas-Metall-Verbindung 37 so weit wie möglich abgeschattet wird. Die Glas-Metall-Verbindung 37 ist empfindlich gegenüber thermischen Ausdehnungen, weshalb eine Abschattung die Zuverlässigkeit der Glas-Metall-Verbindung 37 vergrößert.

Die Reflexion der Strahlung 16 durch den Reflektor 94₁ ist durch den Pfeil P₇ angedeutet.

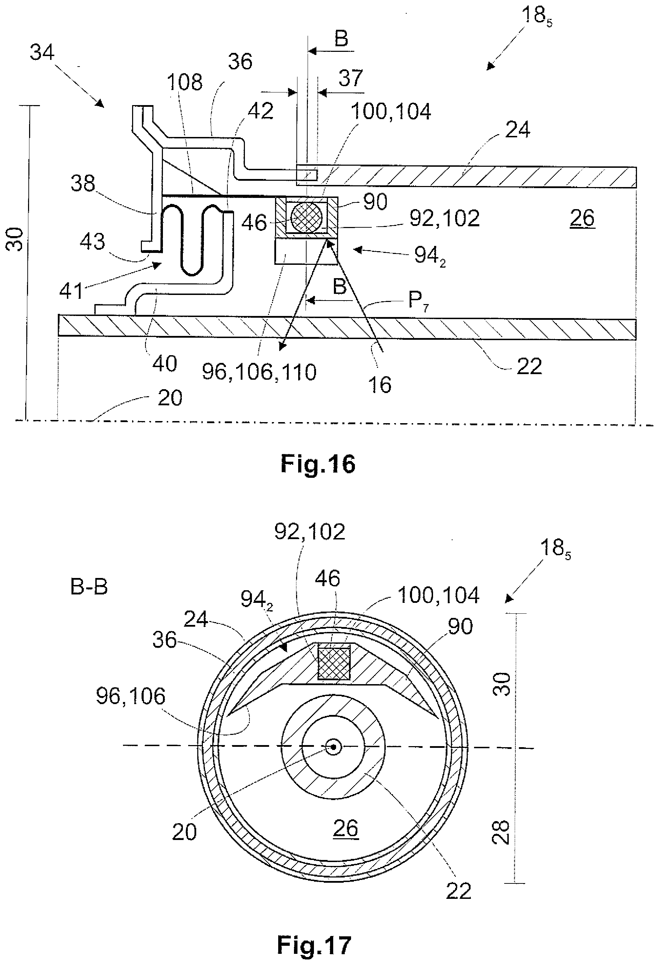

Das in Figur 16 dargestellte Absorberrohr weist ein zweites erfindungsgemäßes Ausführungsbeispiel des Reflektors 94₂ auf, welcher aus mehreren planaren Abschnitten 106 aufgebaut ist. Die planaren Abschnitte 106 können als reflektierende Schicht 96 des Gehäuses 90 oder als separate Bauteile ausgeführt sein. Die reflektierende Schicht 96 kann als polierte Oberfläche 110 ausgebildet sein, die ebenfalls reflektiert. Der Reflektor 94 ist an einer Halterung 108 befestigt, die sich vom Außenring 38 zum Reflektor 94 hin erstreckt, ohne den Faltenbalg 41 zu berühren. Der Reflektor 94 ist so angeordnet, dass er die Glas-Metall-Verbindung 37 abschattet. Die defokussierte Strahlung 16, deren Verlauf mit dem Pfeil P₇ angedeutet ist, wird mittels des Reflektors 94 daran gehindert, auf die Glas-Metall-Verbindung 37 zu treffen. Weiterhin sorgt der Reflektor 94 dafür, dass die defokussierte Strahlung wieder zum Metallrohr 22 zurückgelenkt wird und zur Erwärmung des Thermoöls beiträgt.

Im Gehäuse 90 des Reflektors 94₂ ist der Ablageabschnitt 92 angeordnet, in dem sich das Gettermaterial 46 befindet. Der Ablageabschnitt 92 ist wiederum als die Vertiefung 102 ausgeführt, die mit dem Verschluss 104 verschließbar ist.

In Figur 17 ist das Absorberrohr 18₅ dargestellt, welches bis auf die Abmessungen weitgehend mit dem in Figur 16 übereinstimmt. Das Absorberrohr 18₅ ist anhand der in Figur 16 definierten Schnittebene B-B gezeigt. Man erkennt, dass der Reflektor 94₂ in der dem Kollektorspiegel 12 abgewandten Hälfte 30 des Absorberrohres 18 angeordnet ist.

### Bezugszeichenliste

- 10: Sonnenkollektor
- 12: Kollektorspiegel
- 14: Sonneneinstrahlung
- 16: reflektierte Sonneneinstrahlung
- 18₁ - 18₆: Absorberrohr

- 20: Längsachse des Absorberrohres
- 22: Metallrohr
- 24: Hüllrohr
- 26: Ringraum
- 28: dem Kollektorspiegel zugewandte Hälfte des Absorberrohres

- 30: dem Kollektorspiegel abgewandte Hälfte des Absorberrohres
- 32₁ - 32₄: Haltevorrichtung
- 34: Wandung
- 36: Übergangselement
- 37: Glas-Metall-Verbindung
- 38: Außenring

- 40: Anschlusselement
- 41: Faltenbalg
- 42: inneres Ende
- 43: äußeres Ende
- 44: Aufnahmeabschnitt
- 46: Gettermaterial
- 48: Behälter

- 50: Abstandselement
- 54: Begrenzungsabschnitt

- 60: reflektierende Schicht
- 61: Befestigungsmittel
- 62: Hülle
- 63: Strahlungsschutzschild
- 64: Löcher
- 66: Längsachse der Haltevorrichtung
- 68: Drahtgewebe

- 70: erstes Ende
- 72: zweites Ende
- 73: Verbindungselement
- 74: Vorspannelement
- 76: erste Feder
- 77: Windungen
- 78: reflektierender Abschnitt
- 79: dritte Feder

- 80: erster Bereich
- 82: zweiter Bereich
- 84: erster Behälter
- 86: zweiter Behälter

- 90: Gehäuse
- 92: Ablageabschnitt
- 94: Reflektor
- 96: reflektierende Schicht

- 100: Öffnung
- 102: Vertiefung
- 104: Verschluss
- 106: planarer Abschnitt
- 108: Halterung
- 110: polierte Oberfläche
- P: Strömungsrichtung des Wärmeträgermediums

## Patentansprüche

1. Absorberrohr, insbesondere für Sonnenkollektoren (10) in solarthermischen Kraftwerken mit mindestens einem Kollektorspiegel (12), wobei das Absorberrohr umfasst:
- ein Metallrohr (22) zum Durchleiten und Erhitzen eines Wärmeträgermediums,
- ein das Metallrohr (22) umgebendes Hüllrohr (24) zum Ausbilden eines evakuierbaren Ringraumes (26), und
- einen im Ringraum (26) angeordneten Reflektor (94) zum Reflektieren von Strahlung (14), insbesondere von Sonnenstrahlung, in das Metallrohr (22),
**dadurch gekennzeichnet, dass** im Ringraum (26) ein Gettermaterial (46) zum Binden von sich im Ringraum (26) befindendem freien Wasserstoff angeordnet ist, und dass der Reflektor (94) ein Gehäuse (90) mit einem Ablageabschnitt (92) zum Befestigen und zum Schützen des Gettermaterials (46) vor der Strahlung (14) aufweist.

2. Absorberrohr nach Anspruch 1,
**dadurch gekennzeichnet, dass** das Absorberrohr eine zwischen dem Hüllrohr (24) und dem Metallrohr (22) verlaufende, zumindest abschnittsweise metallische Wandung (34) zum Abdichten des Ringraums (26) umfasst, wobei die Wandung (34) über eine Glas-Metall-Verbindung (37) in das Hüllrohr (24) übergeht und der Reflektor (94) so angeordnet ist, dass er die Glas-Metall-Verbindung (37) vor der Strahlung (14) schützt.

3. Absorberrohr nach einem der Ansprüche 1 oder 2,
**dadurch gekennzeichnet, dass** der Reflektor (94) eine am Gehäuse (90) auf- oder angebrachte reflektierende Schicht (96) umfasst.

4. Absorberrohr nach Anspruch 1 oder 2,
**dadurch gekennzeichnet, dass** der Reflektor (94) eine polierte Oberfläche (110) umfasst.

5. Absorberrohr nach einem der Ansprüche 1 bis 4,
**dadurch gekennzeichnet, dass** der Ablageabschnitt (92) eine oder mehrere Vertiefungen (102) umfasst, in welche das Gettermaterial (46) einbringbar ist.

6. Absorberrohr nach Anspruch 5,
**dadurch gekennzeichnet, dass** die Vertiefung (102) durch einen Verschluss (104) verschließbar ist.

7. Absorberrohr nach einem der Ansprüche 2 bis 6,
**dadurch gekennzeichnet, dass** das Gehäuse (90) an der Wandung (34) befestigt ist.

8. Absorberrohr nach Anspruch 1 bis 7,
**dadurch gekenntzeichnet, dass** das Gehäuse (90) an einem Anschlusselement (40) oder an einem Faltenbalg (41) befestigt ist.

9. Absorberrohr nach Anspruch 8,
**dadurch gekennzeichnet, dass** der Faltenbalg (41) ein inneres Ende (42) und ein äußeres Ende (44) aufweist und das Gehäuse (90) am inneren Ende (42) befestigt ist.

10. Absorberrohr nach einem der Ansprüche 1 bis 7,
**dadurch gekennzeichnet, dass** die Wandung (34) einen Außenring (38) und ein Übergangselement (36) umfasst und das Gehäuse (90) am Außenring (38) oder am Übergangselement (36) befestigt ist.

11. Absorberrohr nach einem der Ansprüche 1 bis 10,
**dadurch gekennzeichnet, dass** das Absorberrohr (18) eine dem Kollektorspiegel (12) zugewandte Hälfte (28) und eine diesem abgewandte Seite (30) aufweist und das Gettermaterial (46) in der dem Kollektorspiegel (12) abgewandten Hälfte (30) angeordnet ist.

12. Absorberrohr nach Anspruch 11,
**dadurch gekennzeichnet, dass** der Reflektor (94) und/oder das Gehäuse (90) in der dem Kollektorspiegel (12) abgewandten Hälfte (30) angeordnet sind.

13. Absorberrohr nach einem der Ansprüche 1 bis 12,
**dadurch gekennzeichnet, dass** der Reflektor (94) einen oder mehrere reflektierende planare Abschnitte (106) umfasst.

## Claims

1. Absorber pipe, in particular for solar collectors (10) in solar thermal power stations having at least one collector mirror (12), wherein the absorber pipe comprises:
- a metal pipe (22) for directing and heating a heat transfer medium,
- a cladding tube (24) which surrounds the metal pipe (22) to form an annular space (26) which can be evacuated, and
- a reflector (94) which is arranged in the annular space (26) for reflecting radiation (14), in particular solar radiation, into the metal pipe (22),
**characterised in that** a getter material (46) is arranged in the annular space (26) for binding free hydrogen which is located in the annular space (26), and **in that** the reflector (94) has a housing (90) having a deposition portion (92) for securing and protecting the getter material (46) from the radiation (14).

2. Absorber pipe according to claim 1,
**characterised in that** the absorber pipe comprises an at least partially metal wall (34) which extends between the cladding pipe (24) and the metal pipe (22) for sealing the annular space (26), wherein the wall (34) merges via a glass/metal connection (37) into the cladding pipe (24) and the reflector (94) is arranged in such a manner that it protects the glass/metal connection (37) from the radiation (14).

3. Absorber pipe according to either claim 1 or claim 2,
**characterised in that** the reflector (94) comprises a reflective layer (96) which is applied or fitted to the housing (90).

4. Absorber pipe according to claim 1 or 2,
**characterised in that** the reflector (94) comprises a polished surface (110).

5. Absorber pipe according to any one of claims 1 to 4,
**characterised in that** the deposition portion (92) comprises one or more recesses (102) in which the getter material (46) can be introduced.

6. Absorber pipe according to claim 5,
**characterised in that** the recess (102) can be closed by means of a closure (104).

7. Absorber pipe according to any one of claims 2 to 6,
**characterised in that** the housing (90) is secured to the wall (34).

8. Absorber pipe according to claims 1 to 7,
**characterised in that** the housing (90) is secured to a connection element (40) or to a folding bellows (41).

9. Absorber pipe according to claim 8,
**characterised in that** the folding bellows (41) has an inner end (42) and an outer end (44) and the housing (90) is secured to the inner end (42).

10. Absorber pipe according to any one of claims 1 to 7,
**characterised in that** the wall (34) comprises an outer ring (38) and a transition element (36) and the housing (90) is secured to the outer ring (38) or the transition element (36).

11. Absorber pipe according to any one of claims 1 to 10,
**characterised in that** the absorber pipe (18) has a half (28) facing the collector mirror (12) and a side (30) which is facing away therefrom and the getter material (46) is arranged in the half (30) facing away from the collector mirror (12).

12. Absorber pipe according to claim 11,
**characterised in that** the reflector (94) and/or the housing (90) is/are arranged in the half (30) facing away from the collector mirror (12).

13. Absorber pipe according to any one of claims 1 to 12,
**characterised in that** the reflector (94) comprises one or more reflective planar portions (106).

## Revendications

1. Tube absorbant, plus particulièrement pour des capteurs solaires (10) situés dans des centrales solaires thermiques avec au moins un miroir collecteur (12), dans lequel le tube absorbant comprend :
- un tube métallique (22) pour faire passer et chauffer un milieu caloporteur,
- un tube de gainage (24) entourant le tube métallique (22) pour former un espace annulaire (26) qui peut être vidé, et
- un réflecteur (94) disposé dans l'espace annulaire (26) pour réfléchir un rayonnement (14), plus particulièrement un rayonnement solaire, dans le tube métallique (22),
**caractérisé en ce que** dans l'espace annulaire (26) est disposée une matière d'absorption (46) pour la liaison d'hydrogène libre se trouvant dans l'espace annulaire (26), et **en ce que** le réflecteur (94) présente un boîtier (90) avec une section de réception (92) pour fixer et pour protéger la matière d'absorption (46) du rayonnement (14).

2. Tube absorbant selon la revendication 1, **caractérisé en ce que** le tube absorbant comprend une paroi (34), métallique au moins par endroits, passant entre le tube de gainage (24) et le tube métallique (22), pour rendre étanche l'espace annulaire (26), dans lequel la paroi (34) passe dans le tube de gainage (24) par une jonction verre - métal (37) et le réflecteur (94) est disposé de manière telle qu'il protège la jonction verre - métal (37) du rayonnement (14).

3. Tube absorbant selon l'une des revendications 1 ou 2, **caractérisé en ce que** le réflecteur (94) comprend une couche réfléchissante (96) posée sur ou fixée au boîtier (90).

4. Tube absorbant selon la revendication 1 ou 2, **caractérisé en ce que** le réflecteur (94) comprend une surface polie (110).

5. Tube absorbant selon l'une des revendications 1 à 4, **caractérisé en ce que** la section de réception (92) comprend une ou plusieurs cavités (102), dans lesquelles la matière d'absorption (46) peut être mise en place.

6. Tube absorbant selon la revendication 5, **caractérisé en ce que** la cavité (102) peut être obturée par un obturateur (104).

7. Tube absorbant selon l'une des revendications 2 à 6, **caractérisé en ce que** le boîtier (90) est fixé à la paroi (34).

8. Tube absorbant selon la revendication 1 à 7, **caractérisé en ce que** le boîtier (90) est fixé à un élément de raccordement (40) ou à un soufflet (41).

9. Tube absorbant selon la revendication 8, **caractérisé en ce que** le soufflet (41) présente une extrémité interne (42) et une extrémité externe (44) et le boîtier (90) est fixé à l'extrémité interne (42).

10. Tube absorbant selon l'une des revendications 1 à 7, **caractérisé en ce que** la paroi (34) comprend une bague extérieure (38) et un élément de transition (36) et le boîtier (90) est fixé à la bague extérieure (38) ou à l'élément de transition (36).

11. Tube absorbant selon l'une des revendications 1 à 10, **caractérisé en ce que** le tube absorbant (18) présente une moitié (28) orientée vers le miroir collecteur (12) et un côté (30) opposé à celui-ci et la matière d'absorption (46) est disposée dans la moitié (30) opposée au miroir collecteur (12).

12. Tube absorbant selon la revendication 11, **caractérisé en ce que** le réflecteur (94) et / ou le boîtier (90) sont disposés dans la moitié (30) opposée au miroir collecteur (12).

13. Tube absorbant selon l'une des revendications 1 à 12, **caractérisé en ce que** le réflecteur (94) comprend une ou plusieurs sections planes (106) réfléchissant la lumière.
